# EUROPEAN PATENT SPECIFICATION

(11) **EP 0 457 278 B1**
(45) Date of publication and mention of the grant of the patent: **17.07.1996**
(21) Application number: 91107797.2
(22) Date of filing: 14.05.1991
(51) Int. Cl.: G11B 5/39, G11B 5/11

(54) **Magnetoresistance effect type thin film magnetic head**
Magnetowiderstandseffekt-Dünnfilmmagnetkopf
Tête magnétique à film mince à effet de magnétorésistance

(30) Priority: 16.05.1990 JP 125852/90
(43) Date of publication of application: 21.11.1991
(73) Proprietor: SONY CORPORATION, Tokyo (JP)
(72) Inventor: Shibata, Takuji, c/o Sony Magnetic Products, Inc., Tokyo (JP); Suyama, Hideo, c/o Sony Magnetic Products, Inc., Tokyo (JP)
(74) Representative: TER MEER - MÜLLER - STEINMEISTER & PARTNER

(56) References cited:
- EP-A- 0 107 982
- EP-A- 0 221 540
- DE-A- 3 604 720
- GB-A- 2 105 093
- PATENT ABSTRACTS OF JAPAN vol. 10, no. 48 (P-431)(2105) 25 February 1986 &JP-A-60 193 102 (TOSHIBA K.K.) 1 Oktober 1985
- PATENT ABSTRACTS OF JAPAN vol. 10, no. 247 (P-490)(2303) 26 August 1986 &JP-A-61 077 114 (FUJITSU K.K.) 19 April 1986

## Description

The present invention relates to a magnetoresistance effect type thin film magnetic head in accordance with the precharacterizing part of claim 1. Such a thin film magnetic head is known from EP-A-0 221 540.

### 2. Description of the Prior Art

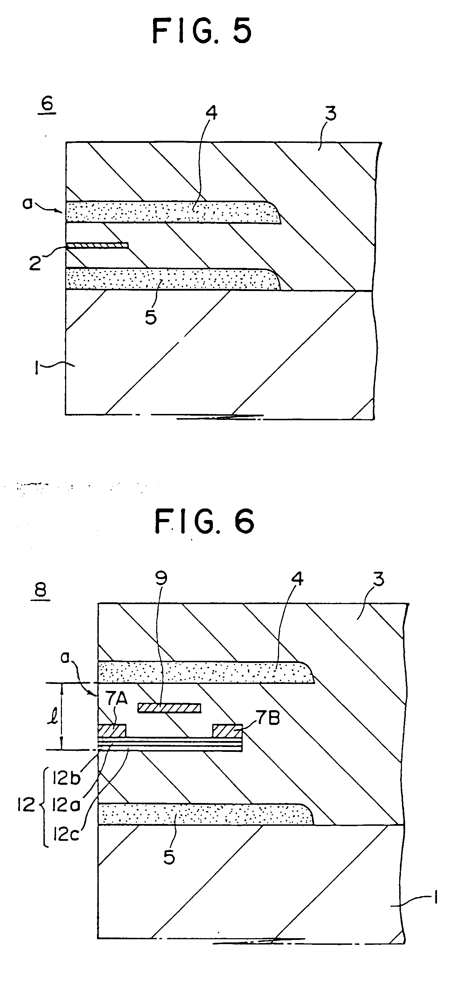

In a conventional magnetoresistance effect type thin film magnetic head having a shielding structure, a magnetoresistance effect element (MR element) 2 is so disposed on a substrate 1 that, as illustrated in Fig. 5, its longitudinal direction becomes parallel with a head contact surface a (vertical to the drawing paper face), and electrodes (not shown) are led out from both ends of the MR element 2, while shielding magnetic layers 4 and 5 are disposed above and below the MR element 2 through an insulator layer 3. In such MR element 2, a sense current supplied thereto flows orthogonally to a signal magnetic field generated from a magnetic recording medium, and the two electrodes are exposed on the magnetic head surface a. Therefore, in such conventional thin film magnetic head 6, the electrodes at both ends thereof are brought simultaneously into contact with the main surface of a conductive magnetic recording medium formed by sputtering or the like on a disk particularly in a hard disk device. Upon contact of the two electrodes with the disk surface, an electrical resistance change occurs between the electrodes in addition to the electric resistance change in the MR element 2 and then comes to cause generation of great noise.

For the purpose of solving the problems mentioned, EP-A-0 221 540 proposes an improved thin film magnetic head 8 wherein, as illustrated in Fig. 6, an MR element 12 is disposed vertically to a head surface a, and two electrodes 7A and 7B are led out from both ends of the MR element 12. One electrode 7A at the fore end is exposed on the magnetic head surface a while the other electrode 7B at the rear end is positioned inside the magnetic head without being exposed on the magnetic head surface a, and a sense current i supplied to the MR element 12 is caused to flow in the same direction as a signal magnetic field generated from a magnetic recording medium.

In such thin film magnetic head 8, a bias conductor 9 is formed for applying a bias magnetic field to the MR element 12, and shielding magnetic layers 4 and 5 are disposed through an insulator layer 3 above and below the MR element 12 inclusive of the bias conductor 9. In this structure, the electrodes 7A and 7B are formed to be thicker than the MR element 12 and are composed of a high-conductivity metallic material, so that the electric resistance change caused between the electrodes 7A and 7B is so small as to be negligible despite contact of the fore end electrode 7A with the disk surface, thereby inducing none of great noise. Further in the above proposal where the MR element 12 is composed of two magnetic layers 12b and 12c via a nonmagnetic intermediate layer 12a, it is possible to certainly avert generation of Barkhausen noise that may otherwise be derived from movement of a magnetic wall.

There are generally known two types relative to the thin film magnetic head having the MR element 12 where a sense current is caused to flow in the same direction as a signal magnetic field. One type is such as shown in Fig. 6 where the MR element 12 and one electrode 7A are exposed on the magnetic head surface a; and the other type (not shown) is such that the MR element 12 is positioned inside, and a signal magnetic field is led to the MR element 12 by way of a magnetic member termed a yoke. The former thin film magnetic head is considered to be superior with respect to the sensitivity.

The upper and lower shielding magnetic layers 4 and 5 provided for enhancing the reproducing resolution are usually composed of a metal such as permalloy. And the electrodes 7A and 7B for the MR element 12 are generally thicker than the MR element and are composed of a material having a low resistivity. Therefore, if the fore-end electrode 7A of the MR element 12 in the thin film magnetic head 8 of Fig. 6 happens to be short-circuited electrically unstably to the shielding metallic magnetic layer 4 in the manufacturing process or during the operation of the magnetic head, such a fault induces disorder of the reproducing characteristics and generation of noise.

Since the reproducing gap ℓ defined between the shielding magnetic layer 4 and the MR element 12 is practically as small as several thousand angstroms (0.6 to 0.3 microns), it has been unavoidable that entrance of any extremely small conductive dirt during the magnetic head operation or any incomplete insulation in the manufacturing process renders the reproducing characteristics unstable.

Meanwhile in the thin film magnetic head of Fig. 6 where the fore end of the MR element is exposed on the magnetic head surface a, there exist some problems including abrasion and erosion, but such problems have already been solved mostly. However, an undesired phenomenon may occur that the MR element is suddenly broken during the operation of the magnetic head or at the rise and halt thereof to consequently fail in obtaining an output of the magnetic head.

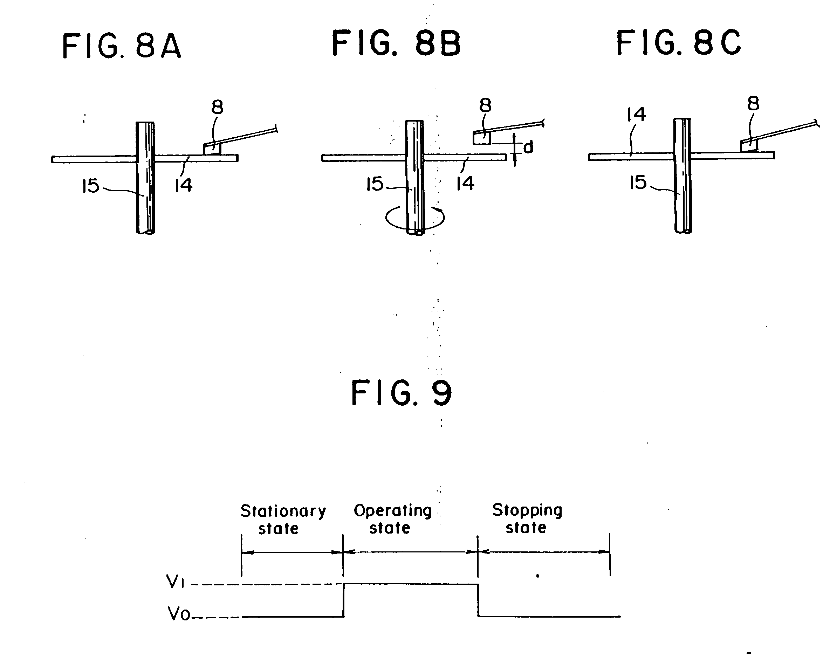

As a result of studying the above mechanism, the following has been found as illustrated in Fig. 8 where a magnetic disk 14 serving as a recording medium is disposed rotatably on a spindle 15 in a hard disk device. Denoted by 8 is an MR thin film magnetic head.

When a stationary state illustrated in Fig. 8A is changed to an operating state of Fig. 8B, the surface potential of the magnetic disk 14 is increased due to the rotation of the magnetic disk 14 (see Fig. 9). The potential difference V₁ - V₀ may reach 20 volts or so and, if the thin film magnetic head 8 is brought into contact with the magnetic disk 14 under such condition (as in a stopping state of Fig. 8C), the static charge on the surface of the magnetic disk 14 is released therefrom to the MR element to consequently damage the same. Meanwhile, when the thin film magnetic head 8 is in contact with the magnetic disk 14 in a stationary state, the above damage can be prevented by opening the circuit of the MR element. However, during the magnetic head operation (in a flying state), the distance d between the magnetic disk 14 and the thin film magnetic head 8 is as small as 0.1 to 0.3 micron, so that they may be brought into mutual contact by some dirt or vibration, and none of adequate countermeasures for such a trouble has been contrived heretofore.

DE-A-3 604 720, page 7, last paragraph to page 9, line 2, already describes the instabilities as explained before. DE-A-3 604 720 proposes a solution therefore consisting in grounding or electrically connecting the shielding members. However, the magnetoresistance effect type thin film magnetic head disclosed in DE-A-3 604 720 has the magnetoresistance effect element oriented parallely to a magnetic recording medium and the shielding member is connected with one electrode of the magnetoresistance effect element at a distance spaced apart from the magnetic head surface where the magnetoresistance effect element is disposed.

### OBJECTS AND SUMMARY OF THE INVENTION

It is a primary object of the present invention to provide an improved magnetoresistance effect type thin film magnetic head which is capable of eliminating electrical instability at the fore end of its MR element vertically (perpendicularly) oriented to the surface of the magnetic recording medium. And another object of the present invention resides in providing an improved magnetoresistance effect type the film magnetic head which averts breakdown of its MR element that may otherwise be derived from static charge on the surface of a magnetic recording medium.

According to the present invention, the above objects are achieved by a magnetoresistance effect type thin film magnetic head comprising:
- a magnetoresistance effect element arranged perpendicularly to a magnetic head surface provided for confronting a magnetic recording medium, wherein said magnetoresistance effect element has a first electrode formed at the fore end at the magnetic head surface and a second electrode at the rear end of the magnetoresistance effect element, respectively, said first electrode at the fore end being exposed on the magnetic head surface and the second electrode at the rear end being positioned inside the magnetic head, and a sense current is supplied to the electrodes of the magnetoresistance effect element whereby it is caused to flow in the same direction as a defected signal magnetic field which is characterized in that a shielding magnetic layer is provided along the magnetoresistive effect element, and said first electrode is electrically connected to said shielding magnetic layer at a region of said magnetic head surface, while the magnetoresistance effect element is magnetically isolated from said shielding layer (claim 1).

Depending claim 2 specifies an advantageous development thereof.

The above and other features and advantages of the present invention will become apparent from the following description which will be given with reference to the illustrative accompanying drawings.

### BRIEF DESCRIPTION OF THE DRAWINGS

Fig. 1 is a sectional view of an exemplary magnetoresistance effect type thin film magnetic head embodying the present invention;
Fig. 2 is a sectional view of another embodiment of the present invention;
Figs. 3 and 4 are sectional views of further embodiments of the present invention;
Figs. 5 and 6 are sectional views of conventional magnetoresistance effect type thin film magnetic heads;
Fig. 7 shows sequential steps in a conventional manufacturing process; and
Figs. 8 and 9 are schematic diagrams for explaining the present invention.

### DESCRIPTION OF THE PREFERRED EMBODIMENTS

Hereinafter preferred embodiments of the present invention will be described with reference to the accompanying drawings.

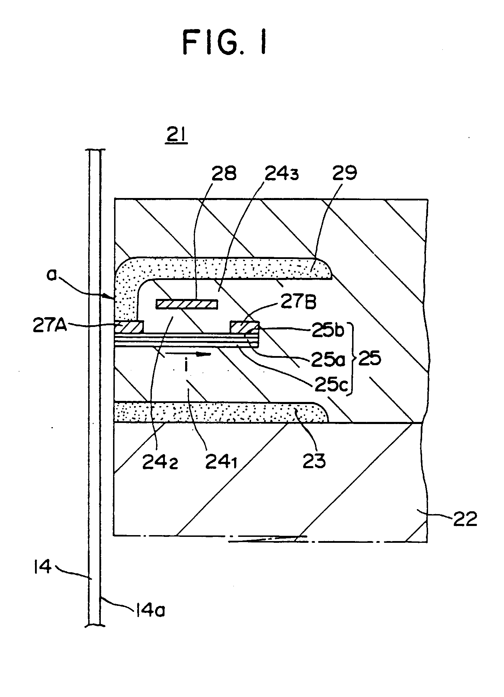

Fig. 1 is a sectional view of a magnetoresistance effect type thin film magnetic head 21 according to a first embodiment. In this thin film magnetic head 21, as illustrated, a lower shielding magnetic layer 23 of a soft magnetic metal such as permalloy and an insulator layer 24₁ are formed on a support substrate 22 by the thin film forming technique, and an MR element 25 is formed on the insulator layer 24₁ in the direction to confront a magnetic recording medium such as a magnetic disk 14, i.e., vertically to a head surface a. Electrodes 27A and 27B are formed at a fore end and a rear end of the MR element 25 respectively, and then an insulator layer 24₂, a bias conductor 28 and an insulator layer 24₃ are formed sequentially on the MR element 25. Further an upper shielding magnetic layer 29 of a soft magnetic metal such as permalloy is formed thereon in such a manner that a portion of the layer 29 is electrically connected to the fore-end electrode 27A of the MR element 25.

In this case, the fore end region of the MR element 25 and the fore-end electrode 27A are exposed on the magnetic head surface a while the rear-end electrode 27B is positioned inside the magnetic head, and a sense current supplied to the MR element 25 is caused to flow in the same direction as a signal magnetic field generated from the magnetic disk 14. The fore-end electrode 27A is electrically connected to the upper shielding magnetic layer 29, while the MR element 25 is magnetically isolated from the upper shielding magnetic layer 29. Therefore the connection of the fore-end electrode 27A to the upper shielding magnetic layer 29 is effected either through a nonmagnetic metal layer or by means of the nonmagnetic electrode 27A. The MR element 25 in this embodiment is composed of two magnetic layers 25b and 25c through a nonmagnetic intermediate layer 25a as illustrated, thereby achieving certain prevention of Barkhausen noise based on the movement of a magnetic wall.

In the thin film magnetic head 21 of such a constitution where the fore-end electrode 27A of the MR element 25 is electrically connected to the upper shielding magnetic layer 29, the fore-end electrode 27A and the upper shielding magnetic layer 29 become one electrode region as viewed from the MR element 25. Therefore, in case the electrode of the MR element 25 is led out from the metallic layer of the fore-end electrode 27A or from the upper shielding magnetic layer 29, the respective potentials of the upper shielding magnetic layer 29 and the fore-end electrode 27A are maintained to be substantially equal to each other (since the upper shielding layer 29 usually has a sufficient thickness of several microns), so that the fore end region of the MR element 25 is rendered electrically stable.

Consequently it becomes possible to eliminate the electrical instability prone to occur in the conventional head at the fore end of the MR element due to the small thickness of the insulator layer 24₃ which is interposed between the fore-end electrode 27A of the MR element 25 and the shielding magnetic layer 29. And thus the fore end region of the MR element can be electrically stabilized regardless of the presence or absence of any dirt in the manufacturing process or during the magnetic head operation, hence ensuring stable characteristics in a playback mode while preventing generation of unsteady noise.

It is a matter of course that, for attaining further complete stability, the upper shielding magnetic layer 29 and the lower shielding magnetic layer 23 may be partially connected to each other.

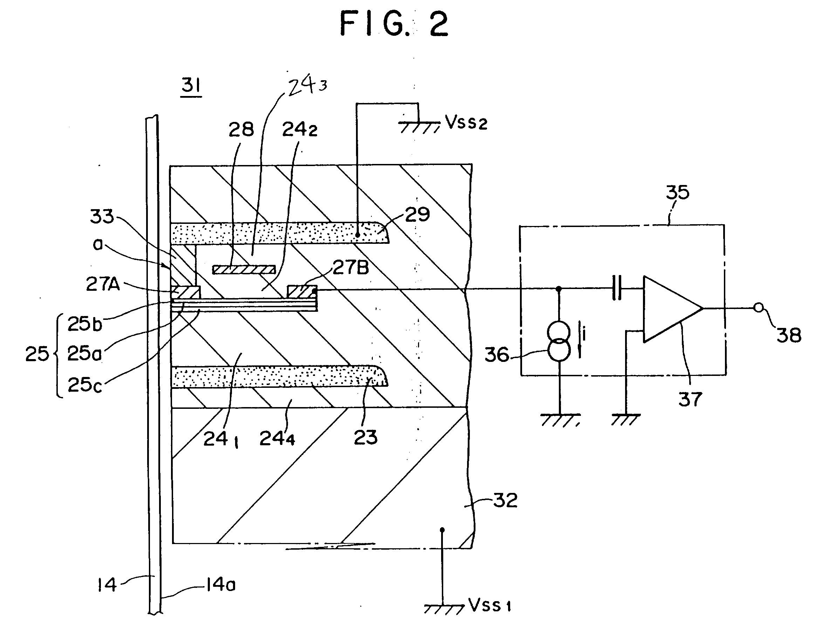

Fig. 2 is a sectional view of another magnetoresistance effect type thin film magnetic head 31 according to a second embodiment. In this thin film magnetic head 31, there are sequentially formed an insulator layer 24₄, a lower shielding magnetic layer 23 of a soft magnetic metal such as permalloy and an insulator layer 24₁ by the thin film forming technique on a support substrate 32 (corresponding to a first conductor) composed of a nonmagnetic conductive material such as Al₂O₃-Tic. Subsequently an MR element 25 of the aforementioned dual-layer structure is provided on the insulator layer 24₁ in a posture perpendicular to a head surface a which confronts the surface 14a of a magnetic disk 14. Then electrodes 27A and 27B are formed respectively at a fore end and a rear end of the MR element 25, and thereafter an insulator layer 24₂, a bias conductor 28 and an upper shielding magnetic layer 29 (corresponding to a second conductor) of a soft magnetic metal such as permalloy are sequentially formed on the MR element 25. The upper shielding layer 29 is electrically connected to the fore-end electrode 27A of the MR element 25 through a nonmagnetic connecting conductor 33, and further the support substrate 32 and the upper shielding magnetic layer 29 are connected to respective ground potentials V_{SS1} and V_{SS2} independently of each other. And a predetermined sense current i is supplied from a constant current source 36 in an amplifier unit 35 to flow in the MR element 25, whereby any electric resistance change caused in the MR element 25 in accordance with the state of magnetization of the disk surface is converted into a voltage change between the electrodes 27A and 27B. Then such voltage change is processed through an amplifier 37 in the amplifier unit 35 and is thereby obtained as an output signal of the thin film magnetic head 31 from an output terminal 38. The support substrate 32 is so formed as to have a great area and a great capacity.

In this case also, the fore end region of the MR element 25 and its fore-end electrode 27A are exposed on the magnetic head surface a while the rear-end electrode 27B is positioned inside the magnetic head similarly to the foregoing embodiment, and a sense current i supplied to the MR element 25 is caused to flow therein in the same direction as a signal magnetic field. In a modification, the fore-end electrode 27A may be composed of a nonmagnetic conductive material and connected directly to the upper shielding magnetic layer 29.

In the thin film magnetic head 31 of such a constitution, if the thin film magnetic head 25 is brought into contact with the charged disk surface 14a during its operation or at the rise and halt thereof, the static charge is mostly released to the ground potential V_{SS1} via the great-capacity support substrate 32 having a large area. And since the ground potential V_{SS1} is independent of the MR element, there never occurs an undesired phenomenon that the static charge flows into the circuit of the MR element and damages the same or generates noise. Even if some charge slightly flows into the MR element 25 due to contact therewith, the charge is promptly released to the ground potential V_{SS2} via the connecting conductor 33 and the upper shielding magnetic layer 29 to thereby avert harmful influence on the circuit of the MR element.

In this thin film magnetic head 31 where the fore-end electrode 27A of the MR element 25 is electrically connected to the upper shielding magnetic layer 29, it is a matter of course that the functional effect of electrically stabilizing the fore end region of the MR element is similarly achievable as described before with reference to Fig. 1.

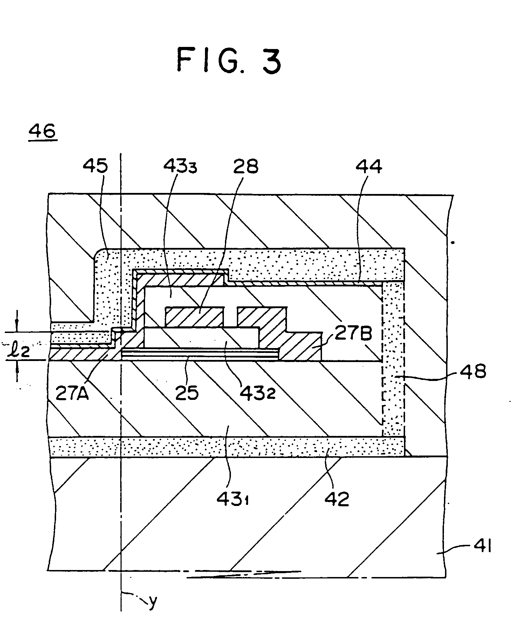

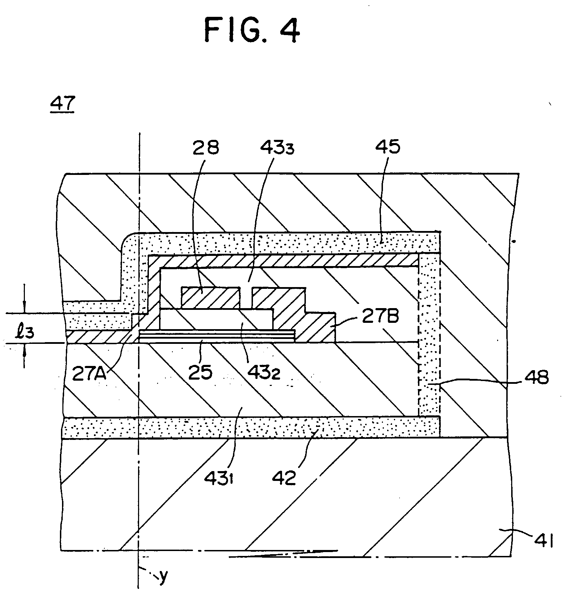

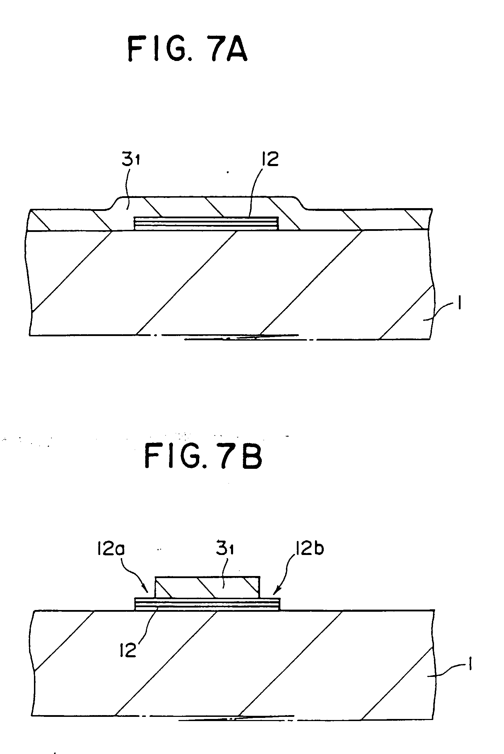

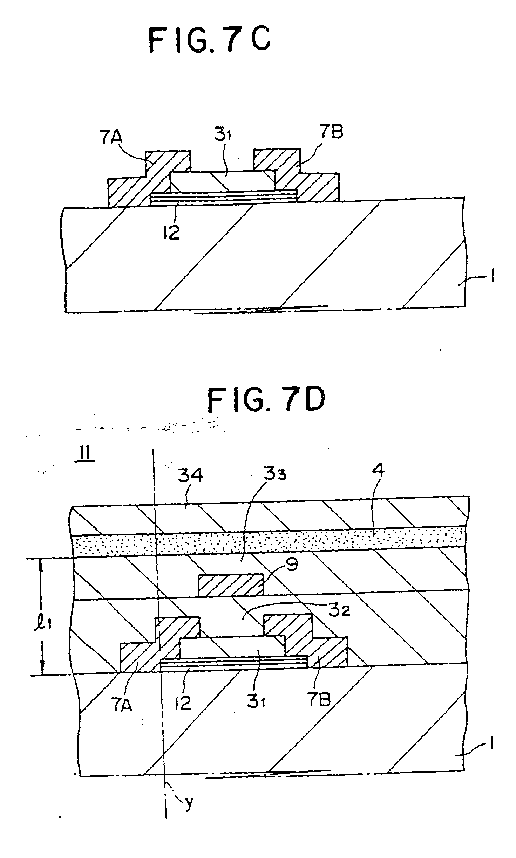

Meanwhile it is requisite to realize a narrow-gap structure for further increasing the linear recording density in the magnetoresistance effect type thin film magnetic head mentioned. Fig. 7 illustrates an exemplary conventional thin film magnetic head of such type manufactured by the known method. First an MR element 12 and an insulator layer 3₁ are formed on a support substrate 1 as shown in Fig. 7A, and then the insulator layer 3₁ is patterned to expose both a fore end 12a and a rear end 12b of the MR element 12 as shown in Fig. 7B. Thereafter a fore-end electrode 7A and a rear-end electrode 7B are formed to be connected respectively to the fore end and the rear end of the MR element 12, as shown in Fig. 7C. Subsequently an insulator layer 3₂, a bias conductor 9, an insulator layer 3₃, an upper shielding magnetic layer 4 and an insulator layer 3₄ are formed sequentially as shown in Fig. 7D, and then the above structure is polished up to a chained-line position y to thereby produce a thin film magnetic head 11. A gap ℓ1 to be finally obtained in the thin film magnetic head 11 is determined by the dimensional sum of the fore-end electrode 7A and the insulator layers 3₂, 3₃. Therefore, in the thin film magnetic head having a dual-layer MR element with a bias conductor in particular, a limit exists in the gap ℓ1 with the reliability taken into consideration, and consequently it is difficult to attain a further narrower gap. Figs. 3 and 4 show other embodiments each contrived to solve the above problem for realizing a narrow-gap structure. In the example of Fig. 3, a lower shielding magnetic layer 42, an insulator layer 43₁, an MR element 25 and an insulator layer 43₂ are formed sequentially on a support substrate 41. After the insulator layer 43₂ is patterned, a bias conductor 28 on the insulator layer 43₂ and a rear-end electrode 27B to be connected to the rear end of the MR element 25 are formed of a conductive material simultaneously with each other. The bias conductor 28 and the rear-end electrode 27B may be composed of a high-conductivity material such as Au or Cu, or of the same metallic material as that of an undermentioned fore-end electrode. Subsequently the bias conductor 28 and the rear-end electrode 27B are covered with an insulator layer 43₃, and patterning is so executed as to simultaneously remove the portions of the insulator layers 43₃, 43₂ corresponding to a fore-end gap, thereby forming a fore-end electride 27A to be connected to the fore end of the MR element 25.

The fore-end electrode 27A is composed of a nonmagnetic moisture-resistant conductor such as Ti, Cr, Mo, W, C or SuS and is connected to an external electrode in an unshown vicinity. And an upper shielding magnetic layer 45 is formed to be electrically connected to the fore-end electrode 27A via a bonding layer 44 composed of a nonmagnetic metal such as Cr. Thereafter the above structure is polished up to a chained-line position y to thereby produce a thin film magnetic head 46.

In another example of Fig. 4, a lower shielding magnetic layer 42, an insulator layer 43₁, an MR element 25 and an insulator layer 43₂ are formed sequentially on a support substrate 41 in a procedure similar to the preceding embodiment, and after the insulator layer 43₂ is patterned, a bias conductor 28 on the insulator layer 43₂ and a rear-end electrode 27B to be connected to the rear end of the MR element 25 are composed of the same conductive material simultaneously with each other. Subsequently the bias conductor 28 and the rear-end electrode 27B are covered with an insulator layer 43₃, and then patterning is so executed as to remove the portions of the insulator layers 43₂, 43₃ corresponding to a fore-end gap, thereby forming a fore-end electrode 27A to be connected to the fore end of the MR element 25. In this case, the fore-end electrode 27A is composed of a nonmagnetic metal to serve also as an undercoat bonding layer for an upper shielding magnetic layer 45. This magnetic layer 45 is formed to be electrically connected to the fore-end electrode 27A, and thereafter the above structure is polished up to a chained-line position y to thereby produce a thin film magnetic head 47.

In both Figs. 3 and 4, the upper and lower shielding magnetic layers 45, 42 may be connected to each other as represented by a broken line 48. The support substrate 41 may be an insulator substrate or one having an insulator layer on a conductive support member of a suitable material such as Al₂O₃-Tic shown in Figs 2. Therefore the thin film magnetic heads 46 and 47 of Figs. 3 and 4 may be so constituted as the aforementioned example of Fig. 1 or Fig. 2.

According to the constitutions of Figs. 3 and 4, the gaps ℓ2 and ℓ3 are dimensionally reduced by a length corresponding to the conventional insulator layers 3₂ and 3₃ (see Fig. 7D), hence realizing a narrower-gap structure. Since the gap region is formed after completion of the rear-end electrode 27B according to this manufacturing method, the thickness of the rear-end electrode 27B can be rendered sufficiently great to consequently diminish the resistance of the rear-end electrode 27B to a small value, thereby minimizing generation of noise based on the heat from the electrode and hence enhancing the signal-to-noise ratio.

Furthermore, no positional deviation occurs between the depth of the MR element and the narrow gap portion since the insulator layers 43₂ and 43₃ are patterned in the same step and the connecting portion of the fore-end electrode of the MR element is formed simultaneously with removal of the insulator layer for achieving a narrow-gap structure. Consequently, there exists no possibility that the gap becomes wide while the depth of the MR element remains, and a short-circuiting trouble is never induced between the bias conductor 28 and the upper shielding magnetic layer 45, hence attaining an advantage of high controllability in the manufacturing process to eventually accomplish a satisfactory MR type thin film magnetic head with a narrow gap and a small depth.

In addition, the problem of interlayer short-circuiting can be solved as the bias conductor 28 is formed simultaneously with the rear-end electrode 27B. In the fore-end electrode 27A where the gap portion is narrow, the resistance value of the electrode material corresponding to such portion is rendered sufficiently small to raise no problem at all.

Although a dual-layer MR element is employed in each of the embodiments mentioned, it is possible to use a single-layer MR element as well.

As described hereinabove, according to the magnetoresistance effect type thin film magnetic head of the present invention, the fore-end electrode of the MR element is electrically connected to the shielding magnetic layer, so that the fore end region of the MR element can be electrically stabilized to attain high stability of the characteristics in a playback mode while preventing generation of unsteady noise.

Furthermore, the first conductor of a great capacity disposed in the proximity of the MR element and the second conductor of a small capacity connected to the fore-end electrode of the MR element are connected to respective ground potentials independently of each other, thereby averting breakdown of the operating thin film magnetic head that may otherwise be caused by the static charge on the surface of a magnetic recording medium.

## Claims

1. A magnetoresistance effect type thin film magnetic head (21) comprising:
- a magnetoresistance effect element (25) arranged perpendicularly to a magnetic head surface (a) provided for confronting a magnetic recording medium (14), wherein said magnetoresistance effect element has a first electrode formed at the fore end at the magnetic head surface (a) and a second electrode at the rear end of the magnetoresistance effect element (25), respectively, said first electrode (27A) at the fore end being exposed on the magnetic head surface (a) and the second electrode (27B) at the rear end being positioned inside the magnetic head, and a sense current (i) is supplied to the electrodes of the magnetoresistance effect element (25) whereby it is caused to flow in the same direction as a detected signal magnetic field
**characterized in that** a shielding magnetic layer (29) is provided on the magnetoresistive effect element, and said first electrode (27a) is electrically connected to said shielding magnetic layer (29) at a region of said magnetic head surface (a), while the magnetoresistance effect element is magnetically isolated from said shielding layer (29).

2. The magnetoresistance effect type thin film magnetic head according to claim 1, wherein said first electrode is connected to said shielding magnetic layer (29) by a non-magnetic connecting conductor (33);
and said shielding magnetic layer (29) and an electrically conducting non-magnetic support substrate (32) having a great area are connected to respective ground potentials independently of each other.

## Patentansprüche

1. Magnetowiderstandseffekt-Dünnfilmmagnetkopf (21) mit:
- einem Magnetowiderstandseffekt-Element (25), das rechtwinklig zu einer Magnetkopffläche (a) angeordnet ist, um einem magnetischen Aufzeichnungsmedium (14) gegenüber zu stehen, wobei das Magnetowiderstandseffekt-Element eine erste Elektrode, die am Vorderende an der Magnetkopffläche (a) ausgebildet ist, und eine zweite Elektrode am Hinterende des Magnetowiderstandseffekt-Elements (25) aufweist, wobei die erste Elektrode (27A) am Vorderende an der Magnetkopffläche (a) freiliegt und die zweite Elektrode (27B) am Hinterende innerhalb des Magnetkopfs liegt, und wobei den Elektroden des Magnetowiderstandseffekt-Elements (25) ein Meßstrom (i) zugeführt wird, wobei bewirkt wird, daß dieser in derselben Richtung fließt, die ein erfaßtes Signalmagnetfeld hat;
**dadurch gekennzeichnet**, daß auf dem Magnetowiderstandseffekt-Element eine Abschirmungsmagnetschicht (29) vorhanden ist und die erste Elektrode (27A) in einem Bereich der Magnetkopffläche (a) elektrisch mit der Abschirmungsmagnetschicht (29) verbunden ist, während das Magnetowiderstandseffekt-Element magnetisch gegen die Abschirmungsschicht (29) isoliert ist.

2. Magnetowiderstandseffekt-Dünnfilmmagnetkopf nach Anspruch 1, bei dem die erste Elektrode über einen nichtmagnetischen Verbindungsleiter (33) mit der Abschirmungsmagnetschicht (29) verbunden ist; und die Abschirmungsmagnetschicht (29) und ein elektrisch leitendes, nichtmagnetisches Trägersubstrat (32) mit großer Fläche unabhängig voneinander mit jeweiligen Massepotentialen verbunden sind.

## Revendications

1. Tête magnétique (21) à couches minces du type à effet magnétorésistif, comprenant :
- un élément (25) à effet magnétorésistif disposé perpendiculairement à une surface (a) de tête magnétique destinée à être en face d'un support (14) d'enregistrement magnétique, l'élément à effet magnétorésistif possèdant une première électrode formée à l'extrémité avant à la surface (a) de la tête magnétique et une seconde électrode placée à l'extrémité arrière de l'élément (25) à effet magnétorésistif, respectivement, la première électrode (27A) placée à l'extrémité avant étant exposée à la surface (a) de la tête magnétique et la seconde électrode (27B), à l'extrémité arrière, étant placée à l'intérieur de la tête magnétique, et un courant de détection (i) est transmis aux électrodes de l'élément (25) à effet magnétorésistif de manière qu'il circule dans le même sens qu'un champ magnétique du signal détecté,
caractérisé en ce qu'une couche magnétique (29) de blindage est disposée sur l'élément à effet magnétorésistif, et la première électrode (27A) est connectée électriquement à la couche magnétique (29) de blindage dans une région de ladite surface (a) de la tête magnétique, alors que l'élément à effet magnétorésistif est magnétiquement isolé de la couche de blindage (29).

2. Tête magnétique à couches minces du type à effet magnétorésistif selon la revendication 1, dans laquelle la première électrode est connectée à la couche magnétique (29) de blindage par un conducteur non magnétique (33) de connexion, et
la couche magnétique (29) de blindage et un substrat non magnétique (32) de support, conducteur de l'électricité, ayant une grande surface, sont connectés à des potentiels respectifs de masse indépendamment l'un de l'autre.
